# EUROPÄISCHE PATENTANMELDUNG

(11) **EP 0 535 501 A2**
(43) Veröffentlichungstag der Anmeldung: **07.04.1993**
(21) Anmeldenummer: 92116141.0
(22) Anmeldetag: 21.09.1992
(51) Int. Cl.: D03J 1/00, B08B 5/00

(54) **Entstaubungsanlage für Maschinen**

(30) Priorität: 20.09.1991 BE 9100880
(71) Anmelder: N.V. Michel Van de Wiele, B-8510 Kortrijk (Marke) (BE); Wulbrecht, Hendrik, B-8770 Ingelmunster (BE)
(72) Erfinder: Debaes, John, B-8420 Wenduine (BE); Wulbrecht, Hendrik, B-8770 Ingelmunster (BE)
(74) Vertreter: Prechtel, Jörg, Dipl.-Phys. Dr.

(57) **Zusammenfassung**

Die Erfindung betrifft eine Anlage zum selbsttätigen Entstauben einer Maschine während ihrer Arbeit, die aus einer Ansaugeinrichtung (1), einer Filtereinrichtung (2) und einer Blaseinrichtung (1) besteht, während an der Blaseinrichtung (1) angeschlossene Blasöffnungen (7) derart angeordnet werden, daß der austretende Luftstrom auf möglichst gut zugängliche und sich bewegende, den Staub hervorrufende Einzelteile (5) jener Maschine gerichtet ist, und daß dieser Luftstrom die schwebenden Staubteilchen zu einer an der Ansaugeinrichtung (1) angeschlossenen Ansaugöffnung (4) mitnimmt und befördert, während die angesaugte Luft mit Staub zu einer Filtereinrichtung (2) geführt und die saubere Luft eventuell über die Blasöffnungen (7) zurück in den Arbeitsraum geblasen wird. Eine Blasöffnung (7) verfügt über eine beschränkte Zufuhröffnung und einen breiteren Innenraum, der in Strömungsrichtung der Luft zuerst einen allmählich zunehmenden Querschnitt besitzt, dem ein allmählich abnehmender Querschnitt folgt, um zu einer spaltförmigen Ausgangsöffnung (9) zu gelangen, wodurch der erzeugte Luftstrom, gleichmäßig verteilt, über die Ausgangsöffnung (9) die Blasöffnung (7) verläßt.

## Beschreibung

Die Erfindung betrifft eine Anlage zum selbsttätigen Entstauben einer Maschine während ihres Arbeitsablaufes, von der der Staub entfernt werden kann, der sich sowohl auf der Maschine und in ihrer Umgebung als auch an und/oder zwischen bestimmten, schwer zu erreichenden Einzelteilen der Maschine befindet; dabei besteht diese Anlage hauptsächlich aus einem Aspirator, der mit Hilfe von Ansaugöffnungen mit Staub und/oder anderem Abfall belastete Luft ansaugt, aus einer Filtereinrichtung, in der der Staub und/oder andere Abfall von der angesaugten Luft abgetrennt wird, und aus einer Blasvorrichtung, die mit Hilfe von Blasöffnungen einen gerichteten Luftstrom erzeugt, der den Staub mitnimmt und innerhalb des Ansaugbereiches von mindestens einer Ansaugöffnung einbringt.

Ein Problem, das dieser Erfindung zugrundeliegt, ist die Tatsache, daß die Anhäufung von Staub auf einer Maschine und an oder zwischen bestimmten Einzelteilen dieser Maschine den schlechten Arbeitsablauf der Maschine und/oder die weniger gute Qualität des angefertigten Produktes zur Folge haben kann, so daß zur Entfernung des Staubes ein regelmäßiges Anhalten der Maschine notwendig ist. Der Stillstand einer Maschine hat natürlich ein Aussetzen der Produktion zur Folge. Die sich wiederholenden Reinigungsarbeiten verursachen folglich eine starke Verminderung des Wirkungsgrades der Maschine.

Ein weiteres, dieser Erfindung zugrundeliegendes Problem ist die Tatsache, daß in der Umgebung einiger Maschinen (z. B. von Textilmaschinen, holzverarbeitenden Maschinen und dgl.) ständig Staubteilchen in großer Menge herumschweben; infolgedessen müssen die Menschen, die in der Umgebung dieser Maschinen arbeiten, und insbesondere die Menschen, die diese Maschinen bedienen, in einem unangenehmen Milieu arbeiten; vor allem atmen diese Menschen täglich noch große Mengen Staub ein, wodurch früher oder später ihre Gesundheit angegriffen wird.

Da man in der Industrie ein ständig zunehmendes Interesse der Verbesserung der Arbeitsbedingungen zukommen läßt, drängt sich auch eine Lösung dieses Problems auf.

Webmaschinen gehören zu denjenigen Maschinen, bei denen die obengenannten Probleme auftreten. In einer Webmaschine läuft eine große Zahl Kettfäden nebeneinander von hinten nach vorn. Diese Kettfäden werden hinten von einem oder mehreren Bäumen abgerollt und erstrecken sich hauptsächlich horizontal nach vorn.

Ferner ist eine Webmaschine mit einer Einrichtung zum Einbringen von Schußfäden in Querrichtung zu den Kettfäden versehen, was geschieht, nachdem zwischen diesen Kettfäden ein Fach gebildet wurde. Für jeden Schuß müssen somit bestimmte Kettfäden in vertikaler Richtung nach oben oder unten gezogen werden. Dies geschieht mit Hilfe sog. Schäfte. Dies sind rechteckige, vertikal angeordnete Rahmen, die mit Hebern versehen sind, die selbst Augen aufweisen. Durch verschiedene Augen hindurch werden Kettfäden gezogen. Mehrere Schäfte werden hintereinander angeordnet, so daß die Auf- oder Abwärtsbewegung eines Schaftes einen Auf- oder Abwärtszug einer bestimmten Gruppe Kettfäden zur Folge hat. Während des Webvorganges bewegen sich die dicht hintereinander stehenden Schäfte fortwährend zueinander auf- und abwärts. Ferner ist die Webmaschine mit einem Riet versehen, das sich über die vollständige Breite des Gewebes erstreckt und infolge einer Vor- und Rückwärtsbewegung nach jedem Schuß den gerade eingebrachten Schußfaden gegen den Geweberand - den vorherigen Schußfaden - bringt. Infolge all dieser sich schnell bewegenden Einzelteile und Fäden wird während des Webvorganges eine große Menge Staub aufgewirbelt, die zum Teil aus Fasern besteht, die aus den Fäden stammen. Dieser schwebt in der Luft der Umgebung umher und sammelt sich etwa überall auf oder an der Webmaschine und zwischen deren unterschiedlichen Einzelteilen. Vor allem wird viel Staub zwischen den Schäften abgelagert, wo er sich nach einer gewissen Zeit zu Knäueln zusammenballt, die zwischen den Schäften hängenbleiben.Bei einer ersten möglichen Situation häufen sich diese Knäuel aufeinander und bleiben in den Schäften stecken. Die Kettfäden gelangen schließlich in diese Knäuel, wodurch sie zusammenhängen und schließlich reißen.

Bei einer anderen möglichen Situation wird ein Knäuel von einem Kettfaden mitgenommen und gelangt folglich in den Webbereich, wodurch aus dem Gewebe Staub austritt.

Oberhalb der Webmaschinen tritt in der Höhe der Schäfte eine Art Schaueffekt auf, bei dem andauernd eine große Menge Staub oberhalb der Webmaschine aufsteigt. Dieser Staub verursacht gemeinsam mit dem Staub, der aus den Schäften oder woanders her aufwirbelt, eine Verschmutzung der Luft an dem Arbeitsplatz.

Der aufwirbelnde Staub, vor allem derjenige Staub, der plötzlich zwischen den Schäften in großen, eventuell zusammengeballten Mengen aufwirbelt, gerät zwischen die Kett- und Schußfäden und wird in das Gewebe eingewebt, in dem dadurch Fehler entstehen. Dies ist unzulässig, so daß die Maschine regelmäßig zur Reinigung stillgesetzt werden muß, was Produktionsverluste zur Folge hat.

Ferner bewirkt der Staub, der fortwährend in der Luft schwebt, bei der Arbeit eine unangenehme und ungesunde Umgebung.

Dadurch daß der technische Fortschritt die Entwicklung immer schneller laufender Webmaschinen ermöglicht, die sich ständig schneller bewegende Einzelteile und Fäden aufweisen, verursacht der Arbeitsablauf der Webmaschine auch immer mehr Staub, und es muß den sich daraus ergebenden Problemen stets mehr Aufmerksamkeit geschenkt werden.

Insbesondere besteht bezüglich der Webmaschinen eine erste bekannte Reinigungsanlage aus einem sog. Roboter zum Ansaugen und Blasen. Er betrifft eine Einrichtung, die hauptsächlich aus einem Ventilator besteht, der auf einer oberhalb unterschiedlicher Webmaschinen festgemachten Schiene verschiebbar befestigt ist, wobei die Anlage beispielsweise derart ausgebildet ist, daß das selbsttätig ausfahrende Gerät hintereinander oberhalb aller am selben Arbeitsplatz stehenden Webmaschinen gelangt.

Mit Hilfe eines ersten abwärts hängenden, mit einer horizontal gerichteten Blasöffnung versehenen Arms, der in einer bestimmten Höhe vor den Webmaschinen aufgehängt wird, bläst der Ventilator, während er mit Hilfe eines zweiten abwärts hängenden, mit einer Saugöffnung versehenen Arms, der am Boden entlang aufgehängt wird, Luft und Staub ansaugt. Der Staub, der auf der Maschine liegt, wird weggeblasen und aufgewirbelt und fällt schließlich auf den Boden, von wo er durch die Ansaugöffnung aufgesaugt wird.

Ein erster Nachteil dieser Einrichtung besteht aus der Tatsache, daß der Luftstrom einzeln die Außenfläche der Maschine erreicht und somit allein an jenen Orten den Staub entfernen wird. Die Staubteilchen, die sich in den Schäften der Webmaschine oder in anderen nicht leicht erreichbaren Einzelteilen befinden, werden mit dieser Einrichtung sicherlich nicht beseitigt werden; daher erfolgt mit dieser Einrichtung nur eine Oberflächen-Reinigung der Maschine, während der Staub an oder zwischen den Einzelteilen, wo er gerade am stärksten angehäuft wird, nicht entfernt wird.

Weiterhin wird der aufwärts fliegende und nach unten fallende Staub nicht in jedem Fall auf den Boden gelangen, sondern sich an anderen Orten absetzen, von wo er nicht von der am Boden entlang hängenden Ansaugöffnung aufgesogen werden kann. Folglich wird sich stets zusätzlicher Staub an den von dem Luftstrom unerreichbaren Orten, wie zwischen den Schäften der Webmaschine, ansammeln, wodurch nochmals die Unwirksamkeit dieser Einrichtung betont wird. Infolgedessen wird die Maschine noch immer regelmäßig und gründlich gereinigt werden müssen, so daß sie dann stillgesetzt werden muß. Das Problem des Produktionsausfalls ist folglich ungelöst. Das Problem bezüglich der Umgebung des Arbeitsplatzes wird auch nicht gelöst, da einerseits der beim Blasen aufwirbelnde und niederfallende Staub noch immer eingeatmet werden kann und andererseits der Staub, der - beispielsweise aus den Schäften - nicht beseitigt wird, noch immer umherwirbeln und eingeatmet werden kann.

Noch ein Nachteil dieser bekannten Einrichtung besteht aus dem Beschwernis für den Bedienenden der Maschine, das die abwärts hängenden Arme bewirken.

Eine andere bekannte Entstaubungsanlage für Webmaschinen besteht aus einer oberhalb der Kettfadenwächter angeordneten Absaugkappe in Verbindung mit einer Absauganlage. Der aufsteigende Luftstrom nimmt den aufwärts fliegenden Staub mit. Der Nachteil dieser Einrichtung besteht wiederum aus der Tatsache, daß die Staubteilchen, die an oder zwischen den Schäften abgelagert sind oder an anderen Orten der Webmaschine für den aufsteigenden Luftstrom unerreichbar sind, nicht beseitigt werden; infolgedessen muß einerseits die Webmaschine für gründliche Reinigungsarbeiten noch immer stillgesetzt werden, und andererseits verunreinigen die aufwärts fliegenden Staubteilchen, die von anderen Orten (z. B. zwischen dem Webriet und Webrahmen) noch immer die Umgebung des Arbeitsplatzes gelangen, was einen schädlichen Einfluß auf die Gesundheit des Personals zur Folge hat.

Das Ziel der Erfindung ist es, eine Entstaubungsanlage für eine Maschine vorzusehen, mit der für die obengenannten Nachteile eine Abhilfe geschaffen wird.

Ein Gegenstand der Erfindung ist eine Entstaubungsanlage für eine Maschine, die aus einer Ansaugeinrichtung für mit Staub und/oder Abfall belastete Luft, aus einer Filtereinrichtung, von der die angesaugte Luft gefiltert wird, und aus einer Blaseinrichtung besteht. An der Ansaugeinrichtung sind eine oder mehrere Ansaugeinrichtungen angeschlossen, und an der Blaseinrichtung sind eine oder mehrere Blasöffnungen angeschlossen.

Eine oder mehrere Blasöffnungen werden gegenüber einer oder mehreren Ansaugöffnungen derart angeordnet, daß mit der von den Blasöffnungen ausgeblasenen Luft ein Luftstrom in einem offenen Raum erzeugt wird, der auf möglichst gut zugängliche, sich bewegende Einzelteile gerichtet ist und verhindert, daß sich die Staubteilchen zusammenballen, abwärts fallen und sich auf jenen Einzelteilen absetzen, wodurch diese Staubteilchen zu den Ansaugöffnungen befördert werden.

Ein wesentliches Merkmal der Erfindung besteht aus der Tatsache, daß der Luftstrom in einem offenen Raum erzeugt wird. Damit wird bezweckt, daß zwischen den Blas- und Ansaugöffnungen keine Konstruktion von Hilfsmitteln vorzusehen ist, die den Luftstrom ganz oder teilweise einschließen oder auf beliebige Art diesen Luftstrom führen.

Die Mischung von Luft und Staubteilchen, die mit Hilfe der Ansaugöffnung vermischt wurde, wird von einer Filtereinrichtung gesäubert, eventuell gekühlt und in den Arbeitsraum zurückgebracht.

Die Blas- und Ansaugöffnungen können jeweils an einer gesonderten Einrichtung - Ansaugeinrichtung - bzw. Blaseinrichtung - angeschlossen sein und voneinander getrennt mit Luft versorgt werden.

Bei einer bevorzugten Ausführungsform wird die angesaugte, den Staub und/oder anderen Abfall mitnehmende Luft in einer Filtereinrichtung filtriert und eventuell gekühlt, und anschließend wird die filtrierte Luft unmittelbar den Blasöffnungen zwecks Wiederverwendung zugeführt.

Bei der Entstaubungsanlage gemäß der Erfindung wird eine bekannte Filtereinrichtung angewendet, Somit kann beispielsweise eine Filtereinrichtung verwendet werden, deren Wirkungsweise auf dem Prinzip des Filters beruht, das in dem belgischen Patent Nr. 08901086 erläutert ist.

Eine besondere Ausführungsform der Erfindung ist eine Entstaubungsanlage für eine Maschine, die aus einem Aspirator besteht, mit dem durch eine oder mehrere Ansaugöffnungen mit Staub und/oder Abfall beladene Luft aufgesaugt werden kann, wobei eine nicht unbedingt in dieser Einrichtung eingebaute Filtereinrichtung die angesaugte Luft filtrieren kann, so daß einerseits der Staub und/oder anderer Abfall in ein hierfür vorgesehenes Auffangbehältnis gelangt und andererseits die saubere Luft durch eine oder mehrere Blasöffnungen zurückgeblasen wird, die einen Luftstrom erzeugen, der die schwebenden Staubteilchen mitnimmt und zu einer oder mehreren Ansaugöffnungen abführt.

Die Entstaubungsanlage gemäß der Erfindung besteht aus einer oder mehreren an dein Ansaugteil des Aspirators angeschlossenen Ansaugöffnungen und aus einer oder mehreren an dem Blasabschnitt des Aspirators angeschlossenen Blasöffnungen.

Um einen Luftstrom in Form einer Gardine zu erzeugen, soll die Luft auf der gesamten Breite der möglichst gut zugänglichen und sich bewegenden Maschinenteile (z. B. auf der gesamten Breite der Schäfte einer Webmaschine) gleichmäßig durch einen schmalen, gerichteten Spalt geblasen werden.

Blasöffnungen von bekannter Gestalt besitzen den Nachteil, die Luft am Ausgang ungleichmäßig zu verteilen. Um diese gleichförmige Verteilung zu erreichen, wurde eine spezielle Blasöffnung entwickelt.

Ein anderer Gegenstand der Erfindung ist die spezielle, für die obengenannte Anwendung entwickelte Blasöffnung.

Die Blasöffnung gemäß der Erfindung besteht aus einem von Wänden umschlossenen Raum, der eine beschränkte Zufuhröffnung zum Anschluß an die die Luft heranführende Leitung und eine langgestreckte, spaltförmige Ausströmöffnung besitzt, durch die die Luft gleichmäßig hinausgeblasen wird.

Der von den Wänden umschlossene Raum besitzt in der Höhe der Zuführöffnung einen Abschnitt - der zu der Strömungsrichtung der Luft in jenen Raum senkrecht verläuft - welcher größer als der Abschnitt der Zufuhrleitung ist. Je weiter man in der Richtung der Ausströmöffnung kommt, desto mehr vergrößert sich dieser Abschnitt noch bis zu einem Maximum, und von dort aus verringert er sich zurück, um in der Nähe der Ausströmöffnung ein Minimum zu erreichen, das weiterhin bis zu der Ausströmöffnung gleich bleibt.

Infolge der Tatsache, daß sich der Durchströmungsabschnitt der Luft, nachdem sie in die Blasöffnung gelangt ist, vergrößert, dehnt sich die angetriebene Luft aus und erlangt infolgedessen eine geringere Geschwindigkeit, so daß in dem Innenraum der Blasöffnung ein gleichmäßig verteilter Druck aufgebaut werden kann. Hierdurch wird der Luftabgang auf der gesamten Breite der spaltförmigen Ausströmöffnung nahezu identisch, was bei den bekannten Blasöffnungen nicht der Fall ist.
Weitere Merkmale und Vorteile der Entstaubungsanlage gemäß der Erfindung und des Blasmundstückes gemäß der Erfindung werden in Verbindung mit der sich hier anschließenden, ausführlichen Beschreibung ihrer bevorzugten Ausführungsform für eine Anwendung an einer Webmaschine verdeutlicht, ohne daß die Erfindung jedoch allein auf diese Ausführungsform oder allein auf diese Anwendungsmöglichkeit beschränkt wird.

Diese Beschreibung wird anhand der hier hinzugefügten Figuren anschaulich gemacht:

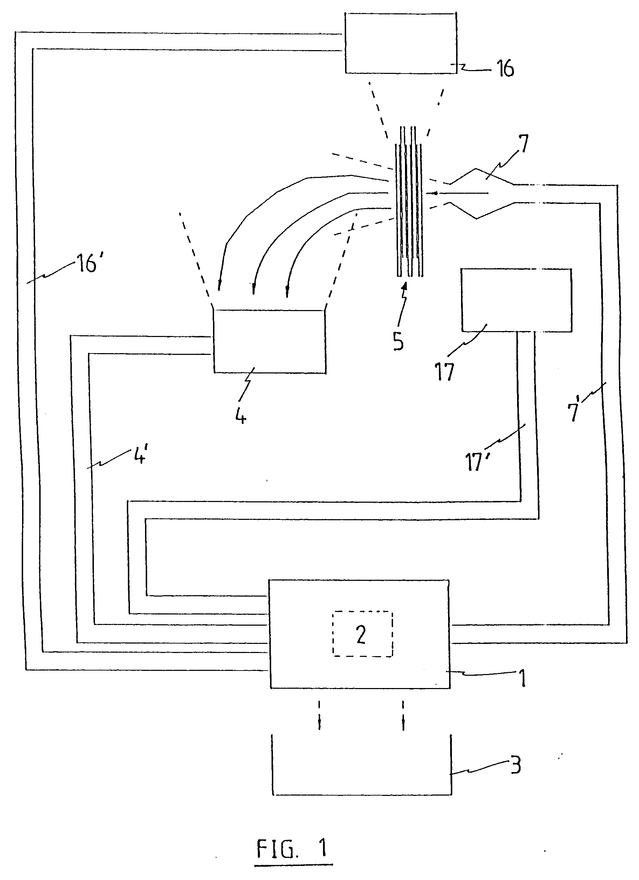

- Figur 1: ist ein Prinzipschema einer Entstaubungsanlage gemäß der Erfindung.

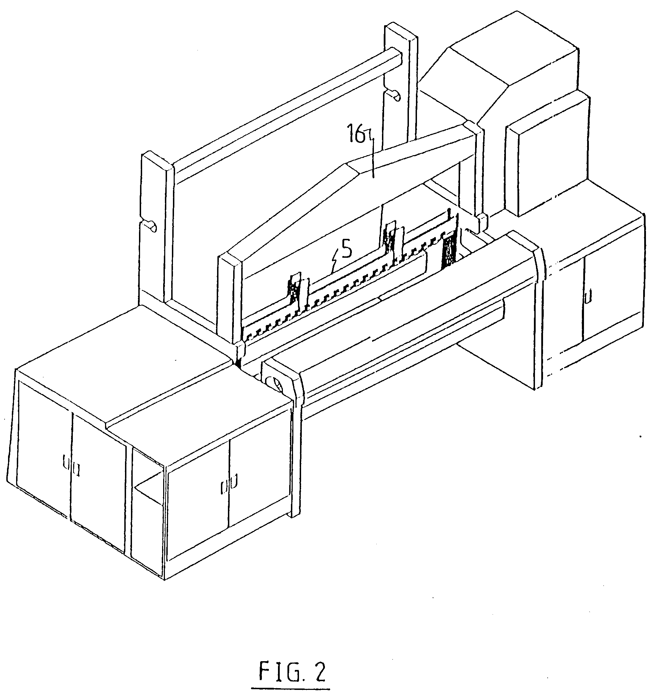

- Figur 2: ist eine perspektivische, als Vorschlag dienende Wiedergabe einer Webmaschine, die mit einer Entstaubungsanlage gemäß der Erfindung ausgerüstet ist,

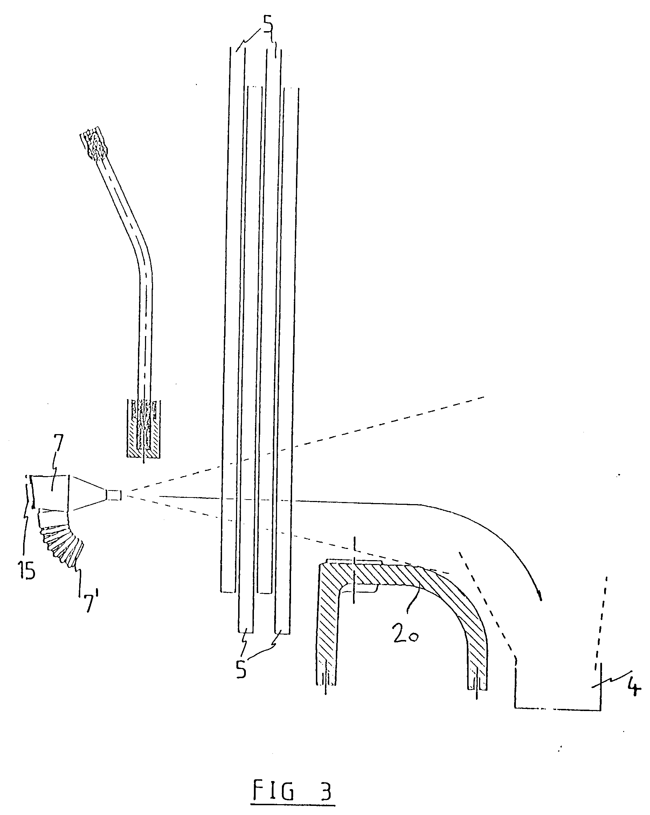

- Figur 3: gibt als Seitenansicht die Anordnung der Blasöffnungen und der mit ihnen zusammenwirkenden Ansaugöffnung an der Webmaschine an.

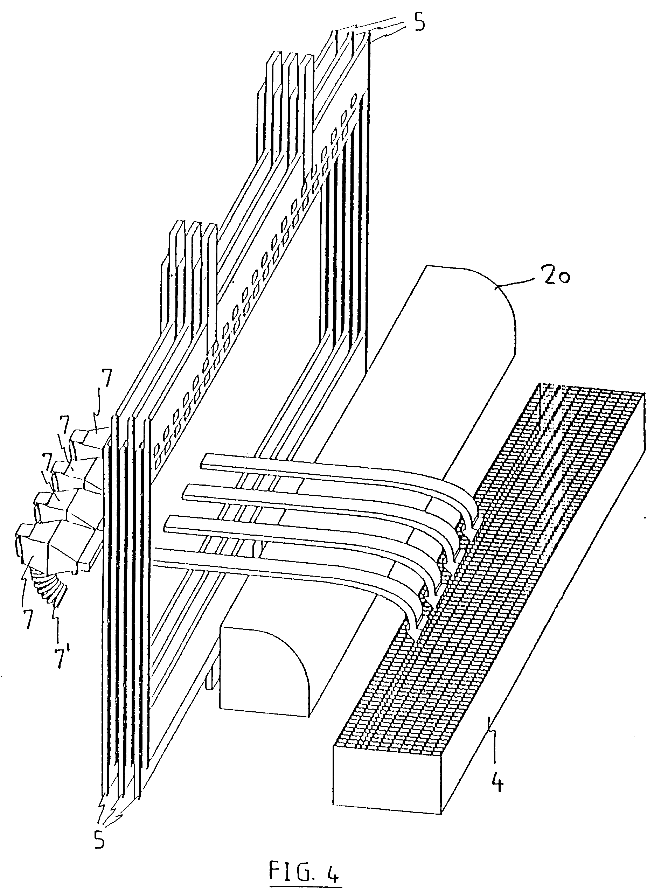

- Figur 4: zeigt perspektivisch die Anordnung der Blasöffnungen und der mit ihnen zusammenwirkenden Ansaugöffnung an der Webmaschine.
- Die Figuren 5a und 5b: sind zwei Zeichnungen einer Blasöffnung gemäß der Erfindung in Perspektive.

Eine bevorzugte Ausführungsform der Entstaubungsanlage und ihre gut festgelegte Anordnung hinsichtlich der Maschinen-Einzelteile kann jedoch exakt anhand einem Ausführungsbeispiels beschrieben werden. Im folgenden sei eine Webmaschine bekannter Konstruktion betrachtet, die mit einer Entstaubungsanlage gemaß der Erfindung ausgerüstet ist.

Die Entstaubungsanlage gemäß der Erfindung enthält einen Aspirator (1) zum Ansaugen von Luft, der mit einer oder mehreren Öffnungen versehen ist, an denen die Luft in diesen Aspirator (1) hineingesogen wird, und eine oder mehrere Öffnungen, an denen die angesaugte Luft aus dem Aspirator (1) zurück geblasen wird, während an jenen genannten Öffnungen Leitungen angeschlossen werden können. Ferner ist in der Entstaubungsanlage gemäß der Erfindung eine Filtereinrichtung (2) vorgesehen, von der Staub oder anderer Abfall, der von der angesaugten Luft mitgeführt wurde, auf allgemein bekannte Art (siehe die belgische Patentschrift Nr. 08901086) aus dieser Luft derart herausgefiltert wird, daß einerseits der Staub oder andere Abfall in einem dafür vorgesehenen Auffangbehältnis (3) abgelagert wird und andererseits die gefilterte Luft zurück ausgeblasen wird. Diese Filtereinrichtung (2) ist folglich derart angeordnet, daß sich alle angesaugte Luft durch diese Filtereinrichtung (2) bewegen muß, ehe sie ausgeblasen wird, und kann entweder in den Aspirator (1) eingebaut oder durch eine Leitung, in der alle angesaugte Luft hindurchgeführt wird, mit dem Aspirator (1) verbunden sein, während eine andere an dieser Filtereinrichtung (2) angeschlossene Leitung die gefilterte Luft weiter durch die Anlage hindurch führt, damit sie schließlich ausgeblasen wird.

Die Entstaubungsanlage gemäß der Erfindung enthält weiterhin noch eine Ansaugöffnung (4) mit einer rechteckigen Zufuhröffnung, die näherungsweise dieselbe Länge wie die Breite der Schäfte (5) besitzt. Diese Ansaugöffnung (4), deren Zufuhröffnung nach oben gerichtet ist, wird an der Rückseite der Schäfte (5) in der Nähe derart horizontal angeordnet, daß sie sichparallel zu den Schäften (5) und über deren gesamte Breite erstreckt. Diese Ansaugöffnung (4) ist mit Hilfe einer Leitung (4') an einer Ansaugöffnung des Aspirators (1) angeschlossen.

Die Entstaubungsanlage gemäß der Erfindung weist ferner noch eine Reihe Blasöffnungen (7) gemaß der Erfindung auf, die in einer horizontalen Reihe so dicht wie möglich beieinander unmittelbar vor den Schäften (5) angeordnet werden, wobei ihre Ausgangsöffnung (9) zu den Schäften (5) gerichtet ist und sich diese Reihe parallel zu den Schäften (5) und vorzugsweise über nahezu die vollständige Breite dieser Schäfte (5) erstreckt. Diese Blasöffnungen (7) sind mit Hilfe von Leitungen (7') an einer oder mehreren Blasöffnungen des Aspirators (1) angeschlossen.

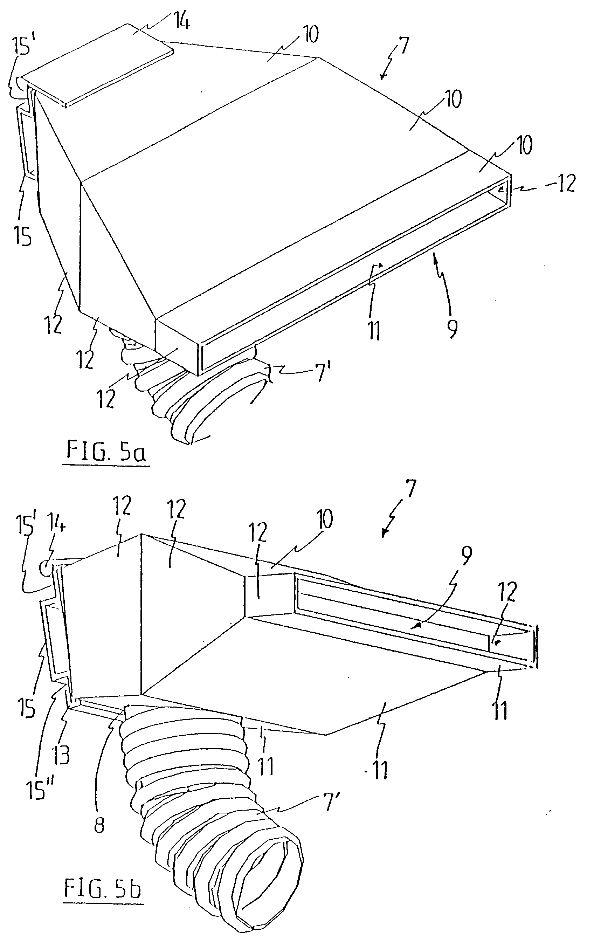

Die Blasöffnungen (7) sind speziell für diese Anwendung entworfen und stellen einen Gegenstand der Erfindung dar (siehe Figuren 5a und 5b).

Die Blasöffnung (7) gemäß der Erfindung besteht aus einer kastenförmigen, aus ebenen Wänden zusammengesetzten Einheit, in der eine Eingangsöffnung (8) und eine Ausgangsöffnung (9) für die Luft vorgesehen sind, und die die anschließend erläuterte, in den Figuren 5a und 5b gezeigte Gestalt aufweist. An den vier Seiten der rechteckigen, ebenen Rückwand schließen sich eine ebene Deckwand (10) bzw. Grundwand (11) und zwei Seitenwände (12) an, wobei sich einerseits die Deckwand (10) und die Grundwand (11) und andrerseits die beiden Seitenwände (12) je zu zweit symmetrisch weiter voneinander entfernen. Diese vier Wände (10), (11) und (12) zeigen jeweils - im selben horizontalen Abstand von der Rückwand - einen geradlinigen Knick, hinter dem diese Wände ebene Abschnitte aufweisen, die jeweils zu zweit - einerseits die Deckwände (10) und die Grundwand (11), andererseits die beiden Seitenwände (12) - symmetrisch dichter zusammenkommen. In demselben Abstand von der Rückwand aus zeigen die vier Wände (10), (11) und (12) nochmals einen geradlinigen Knick, hinter dem diese Wände ebene Abschnitte besitzen, die zu zweit parallel verlaufen, um im selben horizontalen Abstand von der Rückwand aus an einem vorderen Rand zu endigen.

Die obengenannten, an der Vorderseite endigenden Ränder der Wände der Blasöffnung (7) bilden dabei eine rechteckige Vorderseite von geringer Höhe und großer Breite (gleich der Breite der Blasöffnung (7)). Diese Vorderseite ist nicht abgeschlossen, sondern bildet die Ausgangsöffnung (9) der Blasöffnung (7).

An der Außenseite der ebenen Rückwand der Blasöffnung (7) sind parallel zueinander in der Breitenrichtung der Blasöffnung (7) und übereinander zwei vorspringende Randteile (13) und (14) befestigt, von denen der eine Randteil (13) festsitzt und der andere Randteil (14) höhenverstellbar ist und z. B. mit einer Schraube in der Blasöffnung (7) fest eingestellt werden kann. Die beiden Randteile haben einen in ihrer jeweiligen Richtung laufenden, umgebogenen Abschnitt. Für die Anordnung der verschiedenen Blasöffnungen (7) ist eine durchlaufende, gerade, mit Profil versehene Schiene (15) horizontal vor den Schäften (5) befestigt. Diese Schiene (15) besitzt oben entlang über ihre ganze Länge einen vertikal stehenden Flügel (15') von durchgehend derselben Höhe und unten entlang über die ganze Länge einen vertikalen, abwärts gerichteten Flügel (15''), der durchgehend dieselbe Höhe besitzt. Der vertikale Abstand zwischen den Rändern der beiden Flügel (15') und (15'') stimmt mit dem vertikalen Abstand zwischen den vorspringenden Randteilen (13) und (14) überein, damit die Blasöffnung (7) auf der Schiene (15) verschoben werden kann, wobei der umgebogene Abschnitt des oberen Randteiles (14) hinter dem oberen Rand des Flügels (15') einhakt und der umgebogene Abschnitt des unteren Randteiles (13) hinter dem unteren Rand des Flügels (15'') einhakt. Die Blasöffnung (7) kann an der Schiene (15) in die erwünschte Position verschoben werden. Mit Hilfe der festen Einstellung des oberen Randteiles (14) in einer bestimmten Höhe, um zu erreichen, daß die vorspringenden Randteile (13) und (14) der Blasöffnung (7) kräftig auf die Ränder der Flügel (15') und (15'') drücken, wird die Blasöffnung (7) unverschiebbar und stabil angeordnet.

Die Eingangsöffnuug (8) befindet sich in der Grundwand (11) dicht neben der Rückseite der Blasöffnung (7). Längs dieser Öffnung (8) tritt die Luft in den von den Wänden (10), (11) und (12) umschlossenen Innenraum der Blasöffnung (7) ein. Innerhalb der Blasöffnung (7) strömt die Luft in Richtung der Ausgangsöffnung (9), wo sie die Blasöffnung (7) verläßt.

Die Form des von den Wänden (10), (11) und (12) umschlossenen Innenraumes erbringt nunmehr den erwünschten Vorteil der Erfindung. Diese Form ist derart bemessen, daß ein senkrechter Querschnitt durch die Blasöffnung (7) - parallel zu der Rückwand - in der Höhe der Zufuhröffnung (8) eine Fläche aufweist, die größer als der Abschnitt der Zufuhröffnung (8) ist. Die Luft, die aus der Zufuhröffnung (8) ausströmt, erhält somit plötzlich einen größeren Abschnitt - lotrecht zur Strömungsrichtung -.

Dieser Abschnitt vergrößert sich weiter, wenn man stets in der Richtung der Ausgangsöffnung (9) geht, (die Wände entfernen sich also voneinander), und man erreicht in der Höhe des hinteren Knickes in jenen Wänden ein Maximum. Während ihres Durchgangs durch die Blasöffnung (7) hat die Luft somit bis hierher einen allmählich zunehmenden Strömungsquerschnitt erhalten und folglich expandieren können. Die Strömungsgeschwindigkeit hat abgenommen, und der Druck, der bei der hohen Geschwindigkeit nicht sehr gleichmäßig über den ganzen Querschnitt verteilt war (dicht neben den Wänden ist er kleiner als in der Mitte) erhält eine gleichförmigere Verteilung.

In dem zweiten Abschnitt der Blasöffnung (7) nähern sich die Wände (10), (11) und (12) einander, und der Querschnitt verringert sich von neuem, je dichter man an die Ausgangsöffnung (9) herankommt, um nahe bei der Ausgangsöffnung (9) ein Minimum zu erreichen, das von dort ab bis zu der Ausgangsöffnung (9) gleich bleibt.

Die Strömungsgeschwindigkeit der Luft wird somit allmählich bis zu der Blasgeschwindigkeit zunehmen. Der Druck nimmt allmählich zu und erhält die Möglichkeit, sich gleichförmig über den langen, schmalen Querschnitt zu verteilen.

Dies hat zur Folge, daß der Durchsatz an ausgeblasener Luft ungefähr über die vollständige Breite der Blasöffnung (9) identisch ist, so daß ein breiter Luftstrom zustandekommt. Dadurch daß verschiedene Blasöffnungen (7), dicht beieinander stehend, mit ihren Ausgangsöffnungen (9) längs einer geraden, sich verlängernden Linie angeordnet werden, erhält man während ihres Arbeitsablaufes über die vollständige Breite der Schäfte (5) eine schnell und gleichmäßig sich bewegende Luftschicht, in der der Staub mitgenommen wird. Man spricht von einer Luftgardine.

Die Ansaugöffnung (4) ist nunmehr derart angeordnet, daß die Luftgardine auf die Schäfte (5) gerichtet wird, Der Luftstrom nimmt die schwebenden Teilchen in ihrer Strömung mit und befördert sie zu der Ansaugöffnung (4). Nahezu alle Luft, die von den Blasöffnungen (7) hinausgeblasen wurde, wird gemeinsam mit dem mitgeführten Staub auf jene Weise durch die Ansaugöffnung (4) zurück aufgesogen. Diese Luft wird in der Filtereinrichtung (2) filtriert und von neuem von den Blasöffnungen (7) hinausgeblasen. Folglich beschreibt der größte Teil der Luft einen Kreislauf, was einen weiterhin besprochenen, hinzukommenden Vorteil der Erfindung bildet.

Die hier dargestellte, bevorzugte Ausführungsform der Entstaubungsanlage gemäß der Erfindung wird ferner noch durch Ansaugöffnungen (16), (17) ergänzt, die in bezug auf die Webmaschine an zwei verschiedenen Orten angeordnet sind.

Die Ansaugöffnung (16) ist in Form einer Kappe mit einer rechteckigen Zufuhröffnung ausgebildet, die, nach unten gerichtet, vor den Schäften (5) horizontal angeordnet und über eine Leitung (16') an einer Ansaugöffnung des Aspirators angeschlossen wird. Auf jene Weise wird während des Arbeitsablaufes der Webmaschine auch der aufsteigende Staub aus dem Raum vor den Schäften (5) entfernt, um über die Filtereinrichtung (2) schließlich in dem Auffangbehältnis (3) abgelagert zu werden.

Ferner wird in der Höhe der Orte, an denen die beiden Geweberänder abgeschnitten werden, immer wieder eine Ansaugöffnung (17) zum Aufsaugen dieser abgeschnittenen Ränder angeordnet. Dieser Abfall, der bis heute mechanisch zu einem gesonderten Abfallbehälter abgeführt wird, gelangt auf diese Weise ebenfalls in das gemeinsame Abfallbehältnis (3) der Webmaschine.

Eine Doppelstück-Webmaschine erzeugt außerdem eine erhebliche Menge Staub an dem Ort, wo Ober- und Untergewebe bei dem Durchschneiden der Polfäden voneinander getrennt werden. Dies geschieht mit einem schnell hin- und hergehenden Messer, das bei jeder Bewegung eine Reihe Polfäden durchschneidet. Der Staub, der hauptsächlich aus Fasern der durchschnittenen Fäden besteht, wird zu den Seitenrändern des Gewebes mitgenommen. Die Entstaubungsanlage gemäß der Erfindung kann an jenen Orten (an den Gegenseiten der Messerbahn) durch hinzugefügte Ansaugöffnungen (in den Figuren nicht dargestellt) ergänzt werden, die auch diesen Staub aufsaugen und über eine Leitung, die an einer Ansaugöffnung des Aspirators (1) angeschlossen wurde, in dem Auffangbehältnis (3) ablagern.

Ein Vorteil der Entstaubungsanlage gemäß der Erfindung liegt vor allem in der Tatsache, daß während des Arbeitsvorganges der Webmaschine die Schäfte (5) durch die Erzeugung einer gerichteten Luftgardine entstaubt werden. Hierdurch tritt praktisch kein fliegender und frei umherwirbelnder Staub mehr auf, weil sich dieser Staub innerhalb der Luftgardine befindet und unmittelbar von einer Ansaugöffnung (4) abgesaugt wird. Die Schäfte (5) bleiben staubfrei. Die Widerstände von Staubsträhnen in dem Gewebe werden ausgeschaltet, und das Stillsetzen der Maschine zum Entstauben ist nicht mehr notwendig. Hinzu kommt noch, daß durch diese Anordnung der Blasöffnungen (7) und der Ansaugöffnung (4) und durch die Anordnung einer hinzugefügten Ansaugkappe (16), die vor den Schäften (5) die aufsteigenden Staubteilchen ansaugt, und durch eine eventuell hinzukommende Ansaugöffnung in der Höhe des Messers der größte Teil des von der Webmaschine entwickelten Staubes aufgesaugt wird und nicht mehr frei in der die Webmaschine umgebenden Luft umherschweben kann. Die Luft, die von den in jener Umgebung arbeitenden Menschen eingeatmet wird, enthält somit sehr wenig Staub, was die Arbeitsbedingungen stark verbessert und dem schädlichen Einfluß des Staubes auf die Gesundheit zuvorkommt.

Ein zusätzlicher Vorteil der Entstaubungsanlage gemäß der Erfindung liegt in der Tatsache, daß keine Luft außerhalb des Arbeitsplatzes angesaugt wird. Die von den Blasöffnungen (7) hinausgeblasene Luft wird immer zum größten Teil durch die Ansaugöffnung (4) zurück angesaugt, filtriert und zu den Blasöffnungen zurückgeführt.

Folglich ist eine große Menge der sich gerade bewegenden Luft stets dieselbe, wodurch die Temperatur und der Feuchtigkeitsgrad stets mit der Temperatur und dem Feuchtigkeitsgrad der Umgebungsluft des Arbeitsplatzes übereinstimmen.

Die Blasöffnungen (7) gemäß der Erfindung tragen in wesentlichem Maße zu einer guten Arbeitsweise der Entstaubungsanlage bei, indem sie eine breite, sich schnell bewegende Luftgardine bei einer gleichförmigen Geschwindigkeit in der gesamten Breite zu erzeugen ermöglichen.

Mit den bis heute bekannten Blasöffnungen wurde ein Luftstrom erzeugt, der in der Mitte eine größere Geschwindigkeit als an den Rändern aufweist und folglich bei derselben Breite der Blasöffnung eine weniger breite, wirksame Luftbewegung verursacht. Von den nahe beieinander angebrachten Blasöffnungen (7) gemäß der Erfindung wird eine Luftgardine erzeugt, in der die Luft gleichförmig über die Breite der Schäfte (5) verteilt wird. Dieser Effekt, der wesentlich für die Mitnahme von Staub ist, ohne daß dieser in allen Richtungen umherfliegen kann, ist mit den bestehenden Blasöffnungen nicht zu erreichen.

Der erfindungsgemäß erzeugte Luftvorhang verläuft am besten auf kürzestem Wege, also in horizontaler Ebene, durch die Öffnungen der Schäfte. Der Luftstrom wird dann nach Überstreichen eines querverlaufenden, zur tieferliegenden Ansaugöffnung 4 hin abgerundeten Füllkörpers 20 vom Ansaugstrom erfaßt und in die vertikal nach oben gerichteten Ansaugöffnungen 4 eingesogen. Würde man dagegen, wie ansonsten üblich, den horizontalen Luftstrom unmittelbar in die sich auf den Luftstrom zu öffnenden Ansaugöffnung einer dementsprechend im Luftstrom plazierten Ansaugkammer richten, ergäben sich ernsthafte Einbauraumprobleme in eben diesem Bereich. Erfindungsgemäß kann die Absaugeinrichtung in einen weiter untenliegenden und damit weniger kritischen Bereich verlegt werden. Auch ergibt sich eine günstige Strömungsführung, zumal der in horizontaler Ebene liegende Ansaugquerschnitt ohne weiteres vorteilhaft groß gewählt werden kann.

Einige wichtige Gesichtspunkte werden im folgenden wiedergegeben:
Die Erfindung betrifft eine Anlage zum selbsttätigen Entstauben einer Maschine während ihrer Arbeit, die aus einer Ansaugeinrichtung (1), einer Filtereinrichtung (2) und einer Blaseinrichtung (1) besteht, während an der Blaseinrichtung (1) angeschlossene Blasöffnungen (7) derart angeordnet werden, daß der austretende Luftstrom auf möglichst gut zugängliche und sich bewegende, den Staub hervorrufende Einzelteile (5) jener Maschine gerichtet ist, und daß dieser Luftstrom die schwebenden Staubteilchen zu einer an der Ansaugeinrichtung (1) angeschlossenen Ansaugöffnung (4) mitnimmt und befördert, während die angesaugte Luft mit Staub zu einer Filtereinrichtung (2) geführt und die saubere Luft eventuell über die Blasöffnungen (7) zurück in den Arbeitsraum geblasen wird. Eine Blasöffnung (7) verfügt über eine beschränkte Zufuhröffnung und einen breiteren Innenraum, der in Strömungsrichtung der Luft zuerst einen allmählich zunehmenden Querschnitt besitzt, dem ein allmählich abnehmender Querschnitt folgt, um zu einer spaltförmigen Ausgangsöffnung (9) zu gelangen, wodurch der erzeugte Luftstrom, gleichmäßig verteilt, über die Ausgangsöffnung (9) die Blasöffnung (7) verläßt.

## Patentansprüche

1. Entstaubungsanlage für eine Maschine, die aus einer Ansaugeinrichtung (1) für Luft mit Staub und/oder anderem Abfall, aus einer Filtereinrichtung (2), in der der Staub und/oder andere Abfall von der Luft abgetrennt wird, und aus einer Blaseinrichtung (1) besteht, **dadurch gekennzeichnet**, daß ein oder mehrere Blasmundstücke (7) gegenüber einem oder mehreren Ansaugmundstücken (4),(16) derart angeordnet sind, daß mit der von den Blasmundstücken (7) ausgeblasenen Luft in einem offenen Raum ein Luftstrom erzeugt wird, der auf möglichst gut zugängliche, sich bewegende Einzelteile gerichtet ist und verhindert, daß sich Staubteilchen zusammenballen, abwärts fallen und sich an jenen Einzelteilen festsetzen, wodurch diese Staubteilchen zu den Ansaugmundstücken (4), (16) befördert werden.

2. Entstaubungsanlage für eine Maschine gemäß Anspruch 1, **dadurch gekennzeichnet,** daß sich zwischen den Blasmundstücken und den Ansaugmundstücken keine Wände befinden, die den Luftstrom ganz oder teilweise umschließen.

3. Entstaubungsanlage für eine Maschine gemäß Ansprüchen 1 oder 2, **dadurch gekennzeichnet,** daß die angesaugte Luft zu einer Filtereinrichtung (2) gebracht wird,und daß die dort gesäuberte Luft zwecks Wiederverwendung zu den Blasmundstücken (7) geführt wird.

4. Entstaubungsanlage für eine Maschine gemäß Anspruch 3, **dadurch gekennzeichnet,** daß die Filtereinrichtung (2) derart ausgeführt ist, daß der aus der angesaugten Luft filtrierte Staub und/oder andere Abfall in einem Auffangsbehältnis (3) zur Ablage kommt.

5. Entstaubungsanlage für eine Maschine gemäß einem oder mehreren vorhergehenden Ansprüchen, **dadurch gekennzeichnet,** daß zur Anordnung an einer Webmaschine ein oder mehrere Ansaugmundstücke (4), deren Zufuhröffnung nach oben gerichtet ist, an der Unterseite der Schäfte (5) in deren Nähe angeordnet werden und sich annähernd über ihre gesamte Breite parallel zu ihnen erstrecken, und daß unmittelbar vor den Schäften (5) ein oder mehrere Blasmundstücke (7) angeordnet werden, die mit ihrer zu den Schäften (5) gerichteten Ausgangsöffnung (9) höher als die Zufuhröffnung(en) des Ansaugmundstückes bzw. der Ansaugmundstücke (4) liegen.

6. Entstaubungsanlage für eine Maschine gemäß Anspruch 5, **dadurch gekennzeichnet,** daß ein Ansaugmundstück (4) mit rechteckiger Zufuhröffnung und mit annähernd derselben Länge wie die Breite der Schäfte (5) horizontal mit einer nach oben gerichteten Zufuhröffnung hinter den Schäften (5) angeordnet wird und sich näherungsweise über ihre vollständige Breite parallel zu ihnen erstreckt.

7. Entstaubungsanlage für eine Maschine gemäß Anspruch 5 oder 6, **dadurch gekennzeichnet,** daß ein Ansaugmundstück (16) mit einer abwärts gerichteten Zufuhröffnung vor den Schäften (5) und über dem sich bewegenden Riet oberhalb der Webmaschine angeordnet wird.

8. Entstaubungsanlage für eine Maschine gemäß Anspruch 7, **dadurch gekennzeichnet,** daß das Ansaugmundstück (16) aus einer Kappe besteht, die unten entlang eine rechteckige Zufuhröffnung aufweist, daß diese Zufuhröffnung eine Länge besitzt, die angenähert mit der Breite der Schäfte (5) übereinstimmt, und daß dieses Ansaugmundstück (16) mit der Zufuhröffnung horizontal angeordnet wird und sich, abwärts gerichtet, angenähert über die vollständige Breite der Schäfte (5) gerade vor dem Webrahmen oberhalb des Webrietes erstreckt.

9. Entstaubungsanlage für eine Maschine gemäß einem oder mehreren Ansprüchen 5 bis 8, **dadurch gekennzeichnet,** daß an einer Webmaschine in der Höhe der Orte, an denen die Geweberänder abgeschnitten werden, immer wieder ein Ansaugmundstück (17) zum Aufsaugen der abgeschnittenen Geweberänder und für ihre Ableitung zu einem Auffangbehältnis (3) hin angeordnet wird.

10. Entstaubungsanlage für eine Maschine gemäß einem oder mehreren Ansprüchen 5 bis 9, **dadurch gekennzeichnet,** daß auf einer Doppelstück-Webmaschine an den Gegenseiten der Messerbahn ein Ansaugmundstück zum Ansaugen des beim Durchschneiden der Polfäden erzeugten Staubes angeordnet wird.

11. Blasmundstück aus einem von Wänden umschlossenen Raum mit einer Zufuhröffnung für Luft und aus einer spaltförmigen Blasöffnung zum Erzeugen eines Luftstromes, **dadurch gekennzeichnet,** daß der von Wänden (10), (11) und (12) umschlossene Raum dicht neben der Rückseite eine beschränkte Zufuhröffnung (8) zum Anschluß der die Luft heranführenden Leitung (7') besitzt, daß an der Vorderseite eine langgestreckte, spaltförmige Blasöffnung (9) vorgesehen ist, an der entlang die Luft hinausgeblasen wird, daß der umschlossene Raum in der Höhe der Zufuhröffnung (8) über einen Querschnitt verfügt, der größer als der Querschnitt der Zufuhröffnung (8) ist, daß dieser Querschnitt, wenn man weiter in Richtung der Blasöffnung (9) geht, bis zu einem Maximum zunimmt, um sich weiterhin zu einem Minimum hin zu verringern, und daß dieser minimale Querschnitt eine geringe Höhe und eine große Breite besitzt und weiterhin bis zu der Blasöffnung (9) gleich bleibt.

12. Blasmundstück gemäß Anspruch 11, **dadurch gekennzeichnet,** daß es aus einer kastenförmigen, aus ebenen Wänden zusammengesetzten Einheit mit einer ebenen, rechteckigen Rückwand besteht, an der sich - auf den vier Seiten - jeweils eine ebene Deckwand (10), eine ebene Grundwand (11) und zwei ebene Seitenwände (12) anschließen, daß sich einerseits die ebene Deckwand (10) und die ebene Grundwand (11) und andererseits die beiden ebenen Seitenwände (12) symmetrisch zu zweit weiter voneinander entfernen, wobei der maximale Abstand zwischen den Seitenwänden - die Breite des Blasmundstückes (7) - viel größer als der maximale Abstand zwischen der Deckwand und Grundwand - die Höhe des Blasmundstückes (7) - wird, daß diese vier Wände (10), (11) und (12) jeweils - im selben horizontalen Abstand von der Rückwand - einen geradlinigen Knick zeigen, hinter dem die genannten Wände (10), (11) und (12) ebene Abschnitte besitzen, die sich rückwärts zu zweit - einerseits die Deckwand (10) und Grundwand (11), andererseits die beiden Seitenwände (12) - symmetrisch einander näherkommen, wobei der minimale Abstand zwischen den Seitenwänden (12) viel größer als der minimale Abstand zwischen der Deckwand und Grundwand bleibt, und daß die sich einander nähernden Abschnitte der vier Wände (10), (11) und (12) jeweils im selben Abstand von der Rückwand einen zweiten geradlinigen Knick zeigen, hinter dem diese Wände ebene Abschnitte besitzen, wobei einerseits die Deckwand (10) und die Grundwand (11) und andererseits die beiden Seitenwände (12) zu zweit parallel verlaufen,um im selben horizontalen Abstand von der Rückwand in einem Vorderrand zu endigen, der eine rechteckige Vorderseite mit einer großen Breite und einer geringen Hohe bildet, die nicht abgeschlossen ist, und die langgestreckte, spaltförmige Blasöffnung (9) formt.

13. Blasmundstück gemäß Anspruch 11 oder 12, **dadurch gekennzeichnet,** daß an der Außenseite der Rückwand des Blasmundstückes (7) vorspringende Randteile (13), (14) parallel übereinander in der Breitenrichtung des Blasmundstückes (7) befestigt sind, daß der eine Randteil (13) festsitzt und der andere Randteil (14) höhenverstellbar ist und beide Randteile (13) und (14) einen aufeinander zulaufenden, umgebogenen Abschnitt besitzen.

14. Entstaubungsanlage für eine Maschine gemäß einem oder mehreren Ansprüchen 1 bis 10, **dadurch gekennzeichnet,** daß ein oder mehrere Blasmundstücke (7) gemäß dem Anspruch 11, 12 oder 13 verwendet werden.

15. Entstaubungsanlage gemäß einem oder mehreren Ansprüchen 1 bis 10, **dadurch gekennzeichnet,** daß für die Befestigung der Blasmundstücke (7) gemäß dem Anspruch 11, 12 oder 13 eine durchlaufende, gerade, mit Profil versehene Schiene (15) vorgesehen ist, daß diese Schiene (15) oben entlang über ihre vollständige Länge einen vertikal stehenden Flügel (15') mit durchweg derselben Höhe und unten entlang über ihre vollständige Länge einen vertikal abwärts gerichteten Flügel (15'') mit durchweg derselben Höhe besitzt, daß der vertikale Abstand Zwischen den Rändern der Flügel (15'), (15'') mit dem vertikalen Abstand zwischen den Randteilen (13), (14) übereinstimmt, damit die Blasmundstücke (7) auf der Schiene (15) verschoben werden können, wobei der umgebogene Abschnitt des oberen Randteiles (14) hinter dem oberen Rand des Flügels (15') einhakt und der umgebogene Abschnitt des unteren Randteils (13) hinter dem unteren Rand des Flügels (15'') einhakt, und daß durch Feststellen des Randteiles (14) in einer bestimmten Höhe, damit die Randteile (13), (14) kraftig auf die Ränder der Flügel (15'), (15'') drücken, das Blasmundstück (7) unverschiebbar und stabil angeordnet werden kann.

16. Entstaubungsanlage gemäß einem oder mehreren Ansprüchen 1 - 10, 14, 15, **dadurch gekennzeichnet,** daß ein oder mehrere Blasmundstücke gemäß dem AnSpruch 11, 12 oder 13 so dicht beieinander wie möglich angeordnet werden, so daß während ihres Arbeitsvorganges eine Luftgardine erzeugt wird, die auf möglichst gut zugängliche und sich bewegende Maschineneinzelteile (5) gerichtet ist, und die die schwebenden Teilchen in ihrer Strömung mitnimmt und zu dem Ansaugmundstück oder den Ansaugmundstücken (4) befördert.

17. Maschine, ausgerüstet mit einer Entstaubungsanlage gemäß einem oder mehreren vorhergehenden Ansprüchen.

18. Webmaschine mit einer Entstaubungsanlage, insbesondere nach einem der Ansprüche 1 bis 16, **dadurch gekennzeichnet,** daß an einer Seite der Schäfte (5) der Webmaschine eine Blaseinrichtung mit einer oder mehreren Blasöffnungen (Blasmundstücke 7) vorgesehen ist, die einen sich im wesentlichen über die gesamte Breite der Schäfte erstreckenden, die Schaftöffnungen querenden Luftstrom erzeugt, der von einer auf der anderen Seite der Schäfte (5) angeordneten Ansaugeinrichtung mit einer oder mehreren Ansaugöffnungen (Ansaugmundstücke 4) angesaugt wird zur Bildung eines die Schäfte querenden Luftvorhangs.

19. Webmaschine nach Anspruch 18, **dadurch gekennzeichnet,** daß zum seitlichen Ansaugen des Luftstroms die Ansaugöffnungen der Ansaugeinrichtung gegenüber dem Luftstrom in Querrichtung versetzt und in Querrichtung auf den Luftstrom zu gerichtet sind.

20. Webmaschine nach Anspruch 19, **dadurch gekennzeichnet,** daß die Blaseinrichtung einen in horizontaler Ebene liegenden Luftstrom erzeugt, und daß die Ansaugöffnungen der Ansaugeinrichtung vertikal nach oben gerichtet sind und gegenüber den Blasöffnungen der Blaseinrichtung nach unten versetzt sind.
